(19) Europäisches Patentamt
European Patent Office
Office européen des brevets

(11) **EP 1 625 688 B1**

(12) **EUROPÄISCHE PATENTSCHRIFT**

(45) Veröffentlichungstag und Bekanntmachung des Hinweises auf die Patenterteilung:
**09.01.2008 Patentblatt 2008/02**

(21) Anmeldenummer: **04725335.6**

(22) Anmeldetag: **02.04.2004**

(51) Int Cl.:
***H04L 9/00*** *(2006.01)*

(86) Internationale Anmeldenummer:
**PCT/EP2004/003535**

(87) Internationale Veröffentlichungsnummer:
**WO 2004/102866 (25.11.2004 Gazette 2004/48)**

(54) **VORRICHTUNG UND VERFAHREN ZUR KOMMUNIKATION MIT HILFE EINER KRYPTOGRAPHISCH VERSCHLÜSSELTEN CODETABELLE**

DEVICE AND METHOD FOR COMMUNICATION WITH THE AID OF AN ENCRYPTED CODE TABLE

DISPOSITIF ET PROCEDE DE COMMUNICATION AU MOYEN D'UN TABLEAU DE CODAGE CODE DE MANIERE CRYPTOGRAPHIQUE

(84) Benannte Vertragsstaaten:
**DE FR**

(30) Priorität: **16.05.2003 EP 03011250**

(43) Veröffentlichungstag der Anmeldung:
**15.02.2006 Patentblatt 2006/07**

(73) Patentinhaber: **SIEMENS AKTIENGESELLSCHAFT 80333 München (DE)**

(72) Erfinder:
• **SCHIFFMANN, Michael 90587 Tuchenbach (DE)**
• **WIESGICKL, Bernhard 92249 Vilseck (DE)**

(56) Entgegenhaltungen:
**EP-A- 1 059 576          US-A- 4 408 203**

• **BECKER, R., ET. AL.: "AS-Interface - Die Lösung in der Automation" Februar 2003 (2003-02) , AS-INTERNATIONAL ASSOCIATION XP002258215 in der Anmeldung erwähnt Seite 134 -Seite 139**

**Beschreibung**

Die vorliegende Erfindung betrifft eine Kommunikationsprozessorvorrichtung zur Kommunikation in einem Netzwerk mit einer Prozessoreinrichtung zum Verarbeiten eingehender Signale und zum Erzeugen und/oder Bereitstellen ausgehender Signale sowie einer Codespeichereinrichtung zum Bereitstellen eines Codes für die Prozessoreinrichtung. Ferner betrifft die vorliegende Erfindung ein entsprechendes Verfahren zur Kommunikation in einem Netzwerk.

Bei Low-Level-Bussen für industrielle Anwendungen kann das sogenannte Aktuator-Sensor-Interface (AS-i) eingesetzt werden. Das Aktuator-Sensor-Interface ist im Internet unter der Adresse "www.as-interface.net" ausführlich beschrieben.

Zur Übertragung von sicherheitsrelevanten Daten über ein AS-Interface ist in jedem Slave eines AS-i-Netzes eine für dieses Netz einmalige Codefolge von typischerweise 4 x 8 Bit gespeichert. Eine detaillierte Beschreibung einer derartigen Codefolge findet sich in dem Kompendium "AS-Interface - Die Lösung in der Automation" AS-i, Februar 2003, Seiten 134 ff.

Die Codefolge ist in einem von einem AS-i-Kommunikationsprozessor getrennten Bauelement hinterlegt. Durch die Trennung von Kommunikationsprozessor und Codespeicher kann eine ungewollte Übertragung der Codesequenz beispielsweise aufgrund eines Kurzschlusses oder ungenauen Fertigungsprozesses ausgeschlossen werden. In erster Linie sind sicherheitsrelevante Bauelemente und Leiterbahnen voneinander räumlich zu trennen, um den geforderten Fehlerausschluss gewährleisten zu können. Je nach verwendeten Potentialen und Materialien sind hierbei bestimmte Mindestabstände einzuhalten. Die minimalen Abstände liegen beispielsweise bei 0,2 mm. Aus diesem Grund ist die Integration eines Codespeichers in den Kommunikationsprozessor nicht möglich.

Aus der Druckschrift EP 1 059 576 A2 ist eine Sicherheitsschalteranordnung mit zwei Aktoren bekannt. Die Stromversorgung eines Arbeitsgeräts ist nur bei gleichzeitig aktivierten Aktoren eingeschaltet. Die Aktoren sind an einen Codegenerator angeschlossen. Vom Codegenerator ist ein Zahlenwort ausgebbar, welches in zwei Teilworte unterteilt ist, deren Werte von jeweils einem Aktor beeinflussbar ist. Bei aktivierten Aktoren werden die Werte der Teilworte jeweils fortlaufend geändert. In Folge der Deaktivierung eine Aktors nimmt das zugeordnete Teilwort einen fest vorgegebenen Wert ein.

Die Aufgabe der vorliegenden Erfindung besteht somit darin, eine vereinfachte Kommunikationsprozessorvorrichtung und ein entsprechendes Kommunikationsverfahren vorzuschlagen.

Erfindungsgemäß wird diese Aufgabe gelöst durch eine Kommunikationsprozessorvorrichtung zur Kommunikation in einem Netzwerk mit einer Prozessoreinrichtung zum Verarbeiten eingehender Signale und zum Erzeugen und/oder Bereitstellen ausgehender Signale und einer Codespeichereinrichtung zum Bereitstellen eines Codes für die Prozessoreinrichtung, wobei die Codespeichereinrichtung in die Prozessoreinrichtung integriert ist, der Code in der Codespeichereinrichtung verschlüsselt vorliegt und die Prozessoreinrichtung zur Entschlüsselung zumindest eines Teils des Codes an eine außerhalb der Prozessoreinrichtung liegende Decodereinrichtung angeschlossen ist.

Darüber hinaus ist erfindungsgemäß vorgesehen ein Verfahren zur Kommunikation in einem Netzwerk mit den Schritten: Bereitstellen eines Codes und Vergleichen von Daten mit dem Code und/oder Senden des Codes in das Netzwerk, wobei der Code in einer Prozessoreinrichtung verschlüsselt bereitgestellt wird, zumindest ein Teil des verschlüsselten Codes außerhalb der Prozessoreinrichtung entschlüsselt wird und der entschlüsselte Code der Prozessoreinrichtung zur Verfügung gestellt wird.

Dadurch, dass in dem Kommunikationsprozessor der Code in verschlüsselter Form gespeichert ist, wird bei einem Fehler im Kommunikationsprozessor keine gültige Codesequenz übertragen. Damit ist es auch möglich, dass der Codespeicher in dem Kommunikationsprozessor unter Umgehung der vorschriftsgemäßen räumlichen Trennung von beispielsweise mindestens 0,2 mm zwischen sicherheitsrelevanten Baugruppen innerhalb eines integrierten Schaltkreises integriert werden kann.

Ein derartiger gemeinsamer Schaltkreis für den Kommunikationsprozessor und die Codespeichereinrichtung kann als ASIC ausgestaltet sein.

Vorzugsweise wird in der Codespeichereinrichtung auch Verschlüsselungsinformation beziehungsweise Entschlüsselungsinformation abgespeichert, die der Decodiereinrichtung zur Verfügung gestellt wird. Damit kann die externe Decodiereinrichtung einfacher gestaltet werden, da die gesamte Entschlüsselungsinformation nicht in der Decodiereinrichtung abgelegt zu sein braucht.

Die Codespeichereinrichtung kann eine Eingabeeinrichtung zur Eingabe eines verschlüsselten Codes aufweisen. Dadurch kann der Code in die Kommunikationsprozessorvorrichtung beliebig beispielsweise mit Hilfe eines PC eingespeichert und geändert werden.

Die Kommunikationsprozessorvorrichtung kann außerdem eine Tauscheinrichtung besitzen, mit der zumindest zwei Stellen des mehrstelligen Codes vertauschbar sind. Der Tausch dient zur teilweisen Entschlüsselung des verschlüsselten Codes. Generell bedeutet dies, dass zumindest ein Teil der Entschlüsselung direkt in der Kommunikationsprozessorvorrichtung vorgenommen werden kann.

Vorteilhafterweise wird die Kommunikationsprozessorvorrichtung für ein Aktuator-Sensor-Interface zur Kommunikation in einem AS-i-Netz eingesetzt.

Die vorliegende Erfindung wird nun anhand der beigefügten Zeichnungen näher erläutert, in denen zeigen:

FIG 1   einen Schaltungsaufbau einer Kommunikationsprozessorvorrichtung gemäß dem Stand der Technik;

FIG 2   einen Schaltungsaufbau einer Kommunikationsprozessorvorrichtung gemäß der vorliegenden Erfindung;

FIG 3   Codetabellen gemäß einer ersten Ausführungsform;

FIG 4   Codetabellen gemäß einer zweiten Ausführungsform; und

FIG 5   einen konkretisierten Schaltungsaufbau zur Verwendung der Codetabellen von FIG 4.

Die nachfolgend beschriebenen Ausführungsformen stellen bevorzugte Ausführungsbeispiele der vorliegenden Erfindung dar.

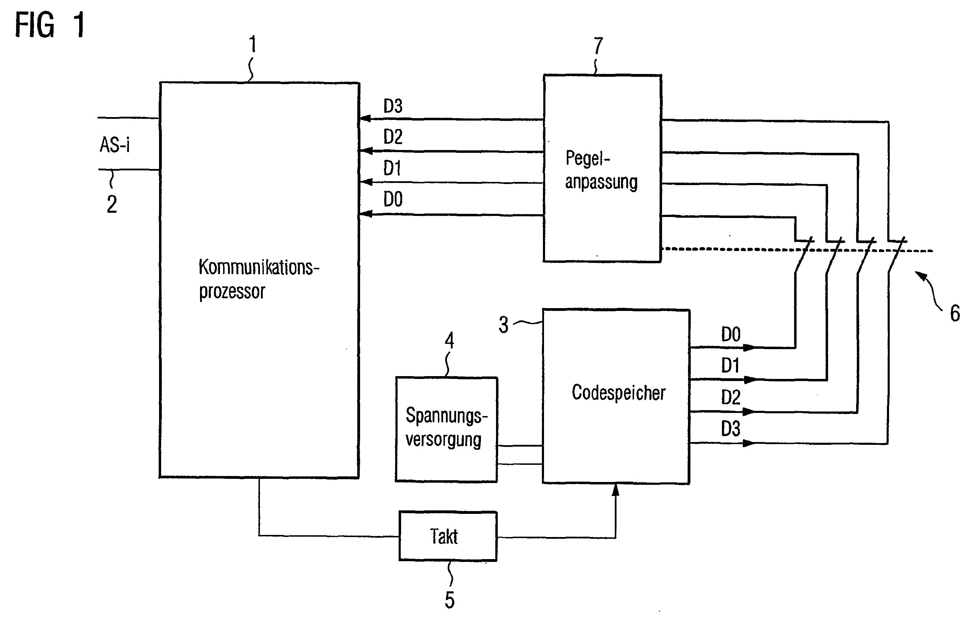

Zur Verdeutlichung der Erfindung sei zunächst anhand von FIG 1 das Prinzipschaltbild einer Kommunikationsprozessorvorrichtung nach dem Stand der Technik näher erläutert. Ein Kommunikationsprozessor 1 sendet und empfängt Daten von einer AS-i-Leitung 2. Der für das AS-Interface spezifische Code ist in einem Codespeicher 3, der mit einer eigenen Spannungsversorgung 4 ausgestattet ist, abgelegt. Der Codespeicher 3 ist über einen Taktgeber 5 mit dem Kommunikationsprozessor 1 verbunden und erhält von diesem die notwendigen Taktimpulse.

Der Codespeicher 3 besitzt vier parallele Ausgänge D0, D1, D2 und D3 zur Übertragung eines vierstelligen Codetelegramms in einem AS-i-Zyklus. Über eine Schaltvorrichtung 6 und eine Pegelanpasseinrichtung 7 sind die Ausgangsleitungen D0 bis D3 zum Kommunikationsprozessor 1 geführt. Die Schalteinrichtung 6 kann beispielsweise mit einem Notausschalter realisiert werden, so dass im Aus-Zustand sämtliche Leitungen offen sind und jeweils eine Null übertragen wird. Dies entspricht dem Notaus-Zustand gemäß der AS-i-Spezifikation. Durch die Pegelanpasseinrichtung 7 werden die beiden getrennten Baugruppen, nämlich Kommunikationsprozessor 1 und Codespeicher 3, hinsichtlich des Pegels aneinander angepasst.

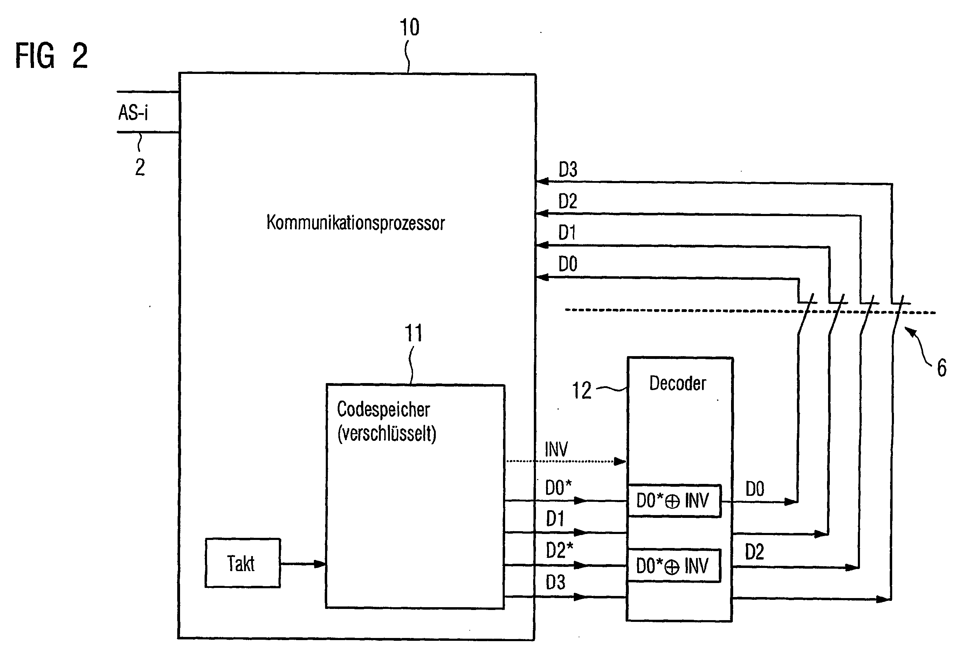

Erfindungsgemäß wird nun gemäß FIG 2 in den Kommunikationsprozessor 10 ein Codespeicher 11 integriert. Eine eigene Spannungsversorgung für den Codespeicher ist damit nicht mehr notwendig. Der Codespeicher 11 wird weiterhin vom Kommunikationsprozessor 10 getaktet.

Damit die geforderte Sicherheit gegeben ist, ist in dem Codespeicher 11 der Code verschlüsselt gespeichert. Darüber hinaus ist in dem Codespeicher 11 auch Entschlüsselungsinformation gespeichert, die über eine Leitung INV parallel zu den Ausgangsleitungen D0*, D1, D2*, D3 zu einem externen Decoder 12 übertragen wird. Die Leitungen D0* und D2* symbolisieren, dass der Code an diesen Stellen beziehungsweise in diesen Leitungen verschlüsselt übertragen wird. Durch eine spezifische Decodier-Operation werden die Stellen D0* und D2* zu D0 und D2 entschlüsselt. Im vorliegenden Beispiel erfolgt die Decodier-Operation durch eine Exclusiv-Oder-Verknüpfung der verschlüsselten Stelle D0* beziehungsweise D2* mit einer Entschlüsselungsinformation INV. Über die Schalteinrichtung 6 werden nun sämtliche uncodierten beziehungsweise decodierten Stellen D0 bis D3 von den Ausgangsleitungen des Decoders 12 in den Kommunikationsprozessor 10 eingeleitet.

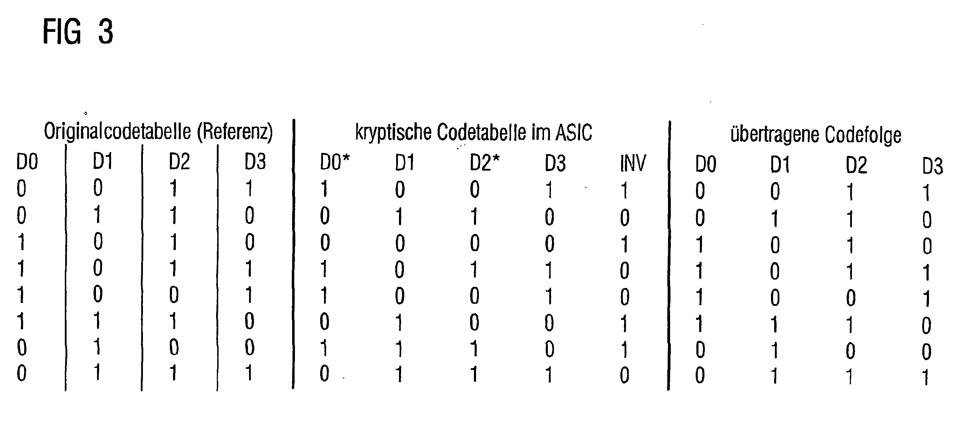

In FIG 3 sind in einem Beispiel die Codes dargestellt, die in der Schaltung von FIG 2 verarbeitet beziehungsweise erstellt werden. Auf der linken Seite ist diejenige 4 x 8-Codefolge dargestellt, die den AS-Interface-spezifischen Code im Original darstellt. In der Mitte von FIG 3 ist eine verschlüsselte 4 x 8-Codefolge einschließlich einer Entschlüsselungsinformation INV für jedes der acht Codetelegramme dargestellt. Auf der rechten Seite von FIG 3 ist schließlich der Code wiedergegeben, wie er in den Kommunikationsprozessor 10 eingespeist wird. Die übertragene Codefolge entspricht exakt der auf der linken Seite dargestellten Originalcodefolge.

Das Regelwerk für die in der Mitte von FIG 3 dargestellte kryptische Codetabelle, die in dem mittels eines ASIC realisierten Kommunikationsprozessor 10 abgespeichert ist, lautet wie folgt:

$$D0* = D0 \oplus INV$$

und ebenso

$$D2* = D2 \oplus INV.$$

Dabei symbolisiert das "$\oplus$" eine Exclusiv-Oder-Verknüpfung. Die Verschlüsselungs- beziehungsweise Entschlüsselungsinformation INV besteht aus einem Bit, das fest oder variabel bei den n-Codewerten mit 0 oder 1 belegt ist. Im vorliegenden Fall ist INV beim ersten, dritten, sechsten und siebten Codewert mit 1 belegt, bei den anderen Codewerten mit 0. Die INV-Information wird dem Codewert zugeordnet im Codespeicher 11 mit abgespeichert. Die Stellen D0 und D3 der im Codespeicher 11 abgespeicherten Codetabelle sind unverändert und entsprechen dem Originalcode.

Die Rückgewinnung der zu übertragenden Codetabelle aus der in dem Kommunikationsprozessor 10 beziehungsweise ASIC gespeicherten kryptischen Codetabelle (vergleiche FIG 3 Mitte) geschieht wie folgt:
Die INV-Information wird an einem ASIC-pin ausgegeben. In dem externen Decoder wird D0 = D0*$\oplus$ INV und D2 = D2*$\oplus$ INV gebildet und übertragen. D1 und D3 werden durch den Decoder 12 durchgeleitet und übertragen.

Vergleicht man die kryptische Codetabelle mit der letztendlich übertragenen und von einem Sicherheitsmonitor erwarteten Codefolge, ist leicht erkennbar, dass durch ASIC-interne Fehler keine ungewollte Übertragung der gültigen Codetabelle stattfinden kann.

Erfindungsgemäß ergibt sich damit der Vorteil, dass gegenüber dem Schaltungsaufbau von FIG 1 mehrere externe Schaltungselemente, nämlich der externe Codespeicher 3, die Spannungsversorgung 4 des Codespeichers 3, der Taktgeber 5 und die Pegelanpasseinrichtung 7 ohne Einschränkung der Sicherheitskategorie eingespart werden können. Diese Schaltungselemente sind in dem Kommunikationsprozessor bereits vorhanden beziehungsweise nicht (mehr) notwendig, oder aber praktisch kostenneutral in diesen integrierbar. Dadurch ergeben sich für einen sicheren AS-i-Slave erhebliche Kosteneinsparungen bei deutlich reduziertem Platzbedarf.

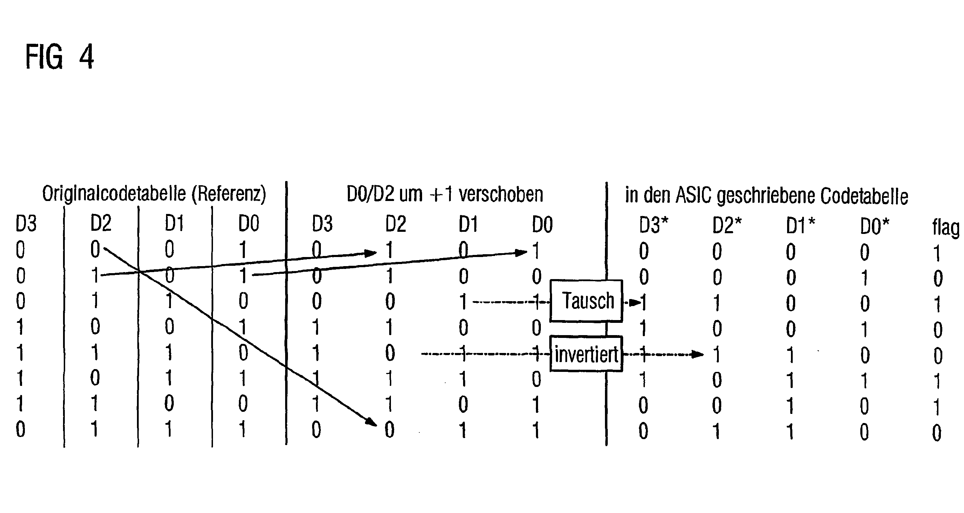

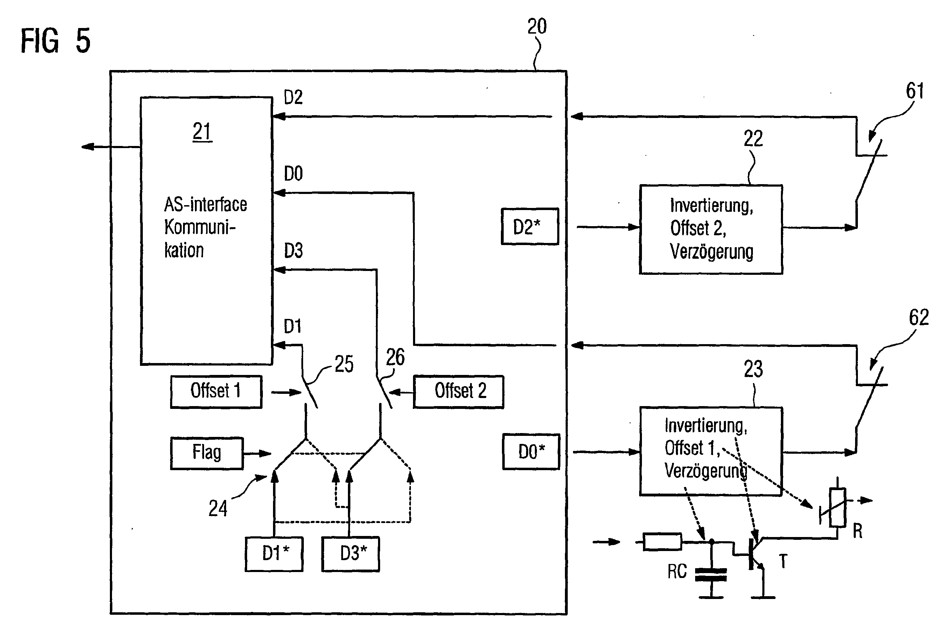

Anhand der Figuren 4 und 5 wird eine alternative Ausführungsform hinsichtlich der Verschlüsselung und der Entschlüsselung der Codetabellen vorgestellt. Auf der linken Seite von FIG 4 ist wiederum die Originalcodetabelle als Referenz dargestellt. In einem ersten Verschlüsselungsschritt werden die Werte der Codetabelle an den Stellen D0 und D2 um + 1, d. h. nach oben, verschoben. Diese Verschiebung ist in FIG 2 in der mittleren Tabelle dargestellt. In einem zweiten Verschlüsselungsschritt werden Werte der Tabelle getauscht beziehungsweise invertiert, wie dies in der rechten Tabelle in FIG 4 dargestellt ist. Diese resultierenden Werte werden in den Codespeicher 11, der in den Kommunikationsprozessor integriert ist, geschrieben. Zusätzlich wird in dem Codespeicher 11 zu jedem vierstelligen Codetelegramm ein Flag abgespeichert.

Das Regelwerk für die kryptographische Codetabelle im ASIC gemäß FIG 4 lautet:

D0 und D2 werden vor dem Speichern in dem ASIC um einen Wert "nach vorne" verschoben und invertiert. Beim ersten, dritten, sechsten und siebten Codewert (fest oder auch variabel bei insgesamt vier Codewerten) werden D1 und D3 vertauscht. Diese Codewerte werden für ein fünftes Bit (Flag) mit 1 gekennzeichnet. Die Codewerte mit nicht vertauschtem D1/D3-Bit sind mit Flag = 0 gekennzeichnet. Die Flag-Information wird dem Codewert zugeordnet mit gespeichert.

Die Rückgewinnung der übertragenen Codetabelle aus der kryptographischen Codetabelle im ASIC erfolgt gemäß der in FIG 5 dargestellten Schaltung. In externen Schaltungsteilen 22 und 23 werden die Werte D0* und D2*, die aus der Kommunikationsprozessorvorrichtung 20 stammen, invertiert, mit einer Offsetspannung Offset 1 beziehungsweise Offset 2 versehen und so verzögert (ca. 20 µs), dass D0* und D2* erst im nächsten AS-Interface-Zyklus übertragen werden. Dazu werden die entschlüsselten Werte D0 und D2 über Schalter 61 und 62 zurück zu der Kommunikationsprozessorvorrichtung 20 beziehungsweise den darin enthaltenen Kommunikationsprozessor 21 zurückgeführt. Die Schaltungsteile 22 und 23 besitzen zur Verzögerung jeweils ein RC-Glied RC, zur Invertierung einen damit verbundenen Transistor T und zur Offseteinstellung einen Spannungsteiler R.

Die Werte D1 und D3 werden in der Kommunikationsprozessorvorrichtung beziehungsweise dem ASIC 20 intern in Abhängigkeit der Offsetspannungen Offset 1 und Offset 2, die bei Anliegen von D0* und D2* anstehen, zur Übertragung zu dem AS-Interface durchgeschaltet. Hierzu werden die Werte D1* und D3* mit einer internen Schalteinrichtung 24 entsprechend einem Flag vertauscht. Falls das Flag (vergleiche rechte Tabelle von FIG 4) 0 ist, werden die Werte D1* und D3* nicht vertauscht und unmittelbar als D1 und D3 an den Kommunikationsprozessor 21 über Schalter 25 und 26 weitergeleitet. Diese internen Schalter 25 und 26 werden über die Offsetspannungen Offset 1 und Offset 2 gesteuert. Hierzu besteht ein Abgriff zu den Leitungen D0 und D2. Falls die externen Schalter 61 und 62 geschlossen sind, sind die Signale in den Leitungen D0 und D2 jeweils mit einem Offset versehen. Diese Offsetspannungen werden dazu verwendet, die internen Schalter 25 und 26 geschlossen zu halten. Falls nun das AS-Interface beispielsweise über einen Notaus-Schalter abgeschaltet wird, sind die beiden Schalter 61 und 62 geöffnet. Die Offsetspannungen Offset 1 und Offset 2 liegen an den internen Schaltern 25 und 26 nicht mehr an, so dass sich auch diese öffnen. Dadurch liegt an sämtlichen Leitungen D0 bis D3 ein Null-Signal an, womit der geforderte Zustand der AS-i-Spezifikation erreicht ist.

Grundsätzlich sind auch beliebige andere Codetabellen und Codefolgen möglich. Auch bei dieser Ausführungsform ergeben sich die oben im Zusammenhang mit den FIG 2 und 3 genannten Vorteile.

## Patentansprüche

1. Kommunikationsprozessvorrichtung zur Kommunikation in einem Netzwerk mit

   - einer Prozessoreinrichtung (10) zum Verarbeiten eingehender Signale und zum Erzeugen und/oder Bereitstellen ausgehender Signale und
   - einer Codespeichereinrichtung (11) zum Bereitstellen eines Codes für die Prozessoreinrichtung (10),

   **dadurch gekennzeichnet, dass**

   - die Codespeichereinrichtung (11) in die Prozessoreinrichtung (10) integriert ist,
   - der Code in der Codespeichereinrichtung (11) verschlüsselt vorliegt und
   - die Prozessoreinrichtung (10) zur Entschlüsselung zumindest eines Teils des Codes an eine außerhalb der Prozessoreneinrichtung (10) liegende Decodereinrichtung (12) angeschlossen ist.

2.  Kommunikationsprozessorvorrichtung nach Anspruch 1, wobei die Prozessoreinrichtung (10) und die Codespeichereinrichtung (11) mit einem gemeinsamen integrierten Schaltkreis realisiert sind.

3.  Kommunikationsprozessorvorrichtung nach Anspruch 1 oder 2, wobei der gemeinsame Schaltkreis ein ASIC ist.

4.  Kommunikationsprozessorvorrichtung nach einem der vorhergehenden Ansprüche, wobei in der Codespeichereinrichtung (11) auch Entschlüsselungsinformation (INV) abgespeichert ist, die der Decodiereinrichtung (12) zur Verfügung stellbar ist.

5.  Kommunikationsprozessorvorrichtung nach einem der vorhergehenden Ansprüche, wobei die Codespeichereinrichtung (11) eine Eingabeeinrichtung zur Eingabe eines verschlüsselten Codes aufweist.

6.  Kommunikationsprozessorvorrichtung nach einem der vorhergehenden Ansprüche, die eine Tauscheinrichtung (24) zum Tauschen von mindestens zwei Stellen des mehrstelligen Codes zur Entschlüsselung aufweist.

7.  Aktuator-Sensor-Interface mit einer Kommunikationsprozessorvorrichtung nach einem der vorhergehenden Ansprüche.

8.  Verfahren zur Kommunikation in einem Netzwerk mit den Schritten:

    - Bereitstellen eines Codes und
    - Vergleichen von Daten mit dem Code und/oder Senden des Codes in das Netzwerk,

    **dadurch gekennzeichnet, dass**

    - der Code in einer Prozessoreinrichtung (10) verschlüsselt bereitgestellt wird,
    - zumindest ein Teil des verschlüsselten Codes außerhalb der Prozessoreinrichtung (10) entschlüsselt wird und
    - der entschlüsselte Code der Prozessoreinrichtung (10) zur Verfügung gestellt wird.

9.  Verfahren nach Anspruch 8, wobei in der Prozessoreinrichtung zusammen mit dem verschlüsselten Code auch Entschlüsselungsinformation (INV) abgespeichert und zur Entschlüsselung zur Verfügung gestellt wird.

10. Verfahren nach Anspruch 8 oder 9, wobei verschlüsselter Code extern generiert und in die Prozessoreinrichtung eingegeben wird.

11. Verfahren nach einem der Ansprüche 8 bis 10, wobei der Code mehrstellig ist und zumindest zwei Stellen in der Prozessoreinrichtung zur Entschlüsselung vertauscht werden.

12. Verfahren nach einem der Ansprüche 8 bis 11, wobei die Kommunikation in einem AS-i-Netz stattfindet.

**Claims**

1.  Communication processor apparatus for communication in a network having

    - a processor device (10) for processing incoming signals and for production and/or provision of outgoing signals, and
    - a code memory device (11) for provision of a code for the processor device (10),

    **characterized in that**

    - the code memory device (11) is integrated in the processor device (10),
    - the code is in an encrypted form in the code memory device (11), and
    - the processor device (10) can be connected to a decoder device (12) which is located outside the processor device (10) for decryption of at least a part of the code.

2.  Communication processor apparatus according to Claim 1, in which the processor device (10) and the code memory device (11) are formed by a common integrated circuit.

3.  Communication processor apparatus according to Claim 1 or 2, in which the common circuit is an ASIC.

4.  Communication processor apparatus according to one of the preceding claims, in which decryption information (INV) which can be made available to the decoding device (12) is also stored in the code memory device (11).

5.  Communication processor apparatus according to one of the preceding claims, in which the code memory device (11) has an input device for inputting an encrypted code.

6.  Communication processor apparatus according to one of the preceding claims, which has a interchanging device (24) for interchanging at least two digits in the multiple digit code for decryption.

7.  Actuator sensor interface having a communication processor apparatus according to one of the preceding claims.

**8.** Method for communication in a network, comprising the following steps:

- provision of a code and
- comparison of data with the code and/or transmission of the code into the network,

**characterized in that**

- the code is provided in an encrypted form in a processor device (10),
- at least a part of the encrypted code is decrypted outside the processor device (10), and
- the decrypted code is made available to the processor device (10).

**9.** Method according to Claim 8, in which decryption information (INV) is also stored together with the encrypted code in the processor device, and is made available for decryption.

**10.** Method according to Claim 8 or 9, in which encrypted code is generated externally and is input to the processor device.

**11.** Method according to one of Claims 8 to 10, in which the code is a multiple digit code and at least two digits are interchanged in the processor device for decryption.

**12.** Method according to one of Claims 8 to 11, in which the communication takes place in an AS-i network.

**Revendications**

**1.** Dispositif processeur de communication pour la communication dans un réseau, comportant

- un dispositif processeur (10) pour le traitement de signaux entrants et pour la production et/ou la fourniture de signaux sortants, et
- un dispositif mémoire de code (11) pour la fourniture d'un code pour le dispositif processeur (10),

**caractérisé par le fait que**

- le dispositif mémoire de code (11) est intégré dans le dispositif processeur (10),
- le code se trouve sous forme cryptée dans le dispositif mémoire de code (11), et
- le dispositif processeur (10) est raccordé pour le décryptage d'au moins une partie du code à un dispositif décodeur (12) situé en dehors du dispositif processeur (10).

**2.** Dispositif processeur de communication selon la revendication 1, dans lequel le dispositif processeur (10) et le dispositif mémoire de code (11) sont réalisés avec un circuit intégré commun.

**3.** Dispositif processeur de communication selon la revendication 1 ou 2, dans lequel le circuit commun est un ASIC.

**4.** Dispositif processeur de communication selon l'une des revendications précédentes, dans lequel une information de décryptage (INV), qui peut être mise à la disposition du dispositif décodeur (12), est aussi mémorisée dans le dispositif mémoire de code (11).

**5.** Dispositif processeur de communication selon l'une des revendications précédentes, dans lequel le dispositif mémoire de code (11) comporte un dispositif d'entrée pour l'entrée d'un code crypté.

**6.** Dispositif processeur de communication selon l'une des revendications précédentes, qui comporte un dispositif d'échange (24) pour l'échange d'au moins deux positions du code à multiples positions en vue du décryptage.

**7.** Interface actionneur - capteur comportant un dispositif processeur de communication selon l'une des revendications précédentes.

**8.** Procédé pour la communication dans un réseau avec les étapes de :

- fourniture d'un code, et
- comparaison de données au code et/ou émission du code dans le réseau,

**caractérisé par le fait que**

- on fournit le code sous forme cryptée dans un dispositif processeur (10),
- on décrypte au moins une partie du code crypté en dehors du dispositif processeur (10), et
- on met le code décrypté à la disposition du dispositif processeur (10).

**9.** Procédé selon la revendication 8, dans lequel on mémorise aussi dans le dispositif processeur, conjointement avec le code crypté, une information de décryptage (INV) et on la met à disposition en vue du décryptage.

**10.** Procédé selon la revendication 8 ou 9, dans lequel on produit un code crypté à l'extérieur et on l'entre dans le dispositif processeur.

**11.** Procédé selon l'une des revendications 8 à 10, dans lequel le code est à plusieurs positions et on échange au moins deux positions dans le dispositif processeur en vue du décryptage.

12. Procédé selon l'une des revendications 8 à 11, dans lequel la communication a lieu dans un réseau AS-i (interface actionneur - capteur).

# FIG 1

EP 1 625 688 B1

FIG 2

AS-i

2

Kommunikationsprozessor

10

D3
D2
D1
D0

6

EP 1 625 688 B1

11

Codespeicher
(verschlüsselt)

Takt

12

Decoder

INV

D0*

D1

D2*

D3

D0* ⊕ INV

D0* ⊕ INV

D0

D2

# FIG 3

| Originalcodetabelle (Referenz) | | | | kryptische Codetabelle im ASIC | | | | | übertragene Codefolge | | | |
|---|---|---|---|---|---|---|---|---|---|---|---|---|
| D0 | D1 | D2 | D3 | D0* | D1 | D2* | D3 | INV | D0 | D1 | D2 | D3 |
| 0 | 0 | 1 | 1 | 1 | 0 | 0 | 1 | 1 | 0 | 0 | 1 | 1 |
| 0 | 1 | 1 | 0 | 0 | 1 | 1 | 0 | 0 | 0 | 1 | 1 | 0 |
| 1 | 0 | 1 | 0 | 0 | 0 | 0 | 0 | 1 | 1 | 0 | 1 | 0 |
| 1 | 0 | 1 | 1 | 1 | 0 | 1 | 1 | 0 | 1 | 0 | 1 | 1 |
| 1 | 0 | 0 | 1 | 1 | 0 | 0 | 1 | 0 | 1 | 0 | 0 | 1 |
| 1 | 1 | 1 | 0 | 0 | 1 | 0 | 0 | 1 | 1 | 1 | 1 | 0 |
| 0 | 1 | 0 | 0 | 1 | 1 | 1 | 0 | 1 | 0 | 1 | 0 | 0 |
| 0 | 1 | 1 | 1 | 0 | 1 | 1 | 1 | 0 | 0 | 1 | 1 | 1 |

EP 1 625 688 B1

# FIG 4

| Originalcodetabelle (Referenz) | | | | D0/D2 um +1 verschoben | | | | in den ASIC geschriebene Codetabelle | | | | |
|---|---|---|---|---|---|---|---|---|---|---|---|---|
| D3 | D2 | D1 | D0 | D3 | D2 | D1 | D0 | D3* | D2* | D1* | D0* | flag |
| 0 | 0 | 0 | 1 | 0 | 1 | 0 | 1 | 0 | 0 | 0 | 0 | 1 |
| 0 | 1 | 0 | 1 | 0 | 1 | 0 | 0 | 0 | 0 | 0 | 1 | 0 |
| 0 | 1 | 1 | 0 | 0 | 0 | 1 | 1 | 1 | 1 | 0 | 0 | 1 |
| 1 | 0 | 0 | 1 | 1 | 1 | 0 | 0 | 1 | 0 | 0 | 1 | 0 |
| 1 | 1 | 1 | 0 | 1 | 0 | 1 | 1 | 1 | 1 | 0 | 0 | 0 |
| 1 | 0 | 1 | 1 | 1 | 1 | 1 | 0 | 1 | 0 | 1 | 1 | 1 |
| 1 | 1 | 0 | 0 | 1 | 1 | 0 | 1 | 0 | 0 | 1 | 0 | 1 |
| 0 | 1 | 1 | 1 | 0 | 0 | 1 | 1 | 0 | 1 | 1 | 0 | 0 |

Tausch

invertiert

EP 1 625 688 B1

FIG 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1059576 A2

### In der Beschreibung aufgeführte Nicht-Patentliteratur

- *AS-Interface - Die Lösung in der Automation,* Februar 2003, 134 ff